# EUROPEAN PATENT APPLICATION

(11) **EP 1 435 463 A1**
(43) Date of publication of application: **07.07.2004**
(21) Application number: 04000035.8
(22) Date of filing: 02.01.2004
(51) Int. Cl.: F16B 13/06, F16B 37/06

(54) **Buckling blind fasterer and its setting method**

(30) Priority: 06.01.2003 JP 2003000282
(71) Applicant: Newfrey LLC, Newark, Delaware 19711 (US)
(72) Inventor: Minami, Mitsuhiro Pop Rivet Fastener K.K., Toyohashi-shi, Aichi-ken (JP); Kashimura, Shuji Pop Rivet Fastener K.K., Toyohashi-shi, Aichi-ken (JP); Adachi, Ryoichi K.K.Honda Access, Saitama 352-8589 (JP); Kobayashi, Ichiro K.K.Honda Access, Saitama 352-8589 (JP); Hidaka, Tomoaki K.K.Honda Access, Saitama 352-8589 (JP)
(74) Representative: Haar, Lucas H., Dipl.-Ing.

(57) **Abstract**

A fastener (1) comprises a flange (2) having an insertion hole (6) , a plurality of circumferentially spaced clamping legs (3) extending from the flange (2) , and a nut (5) connected integrally to ends of the clamping legs (3). The nut (5) and the clamping legs (3) are inserted into a mounting hole of a workpiece. Then the nut (5) is pulled toward the flange (2) to cause buckling of the clamping legs (3). The fastener (1) is set to the workpiece by clamping the workpiece between the buckled clamping legs (3) and the flange (2). Each of the clamping legs (3) has a buckling portion (10) , a nut-side leg portion (11) and a flange-side leg portion (13). The buckling portion (10) is thinner than the nut-side and flange-side leg portions. The nut-side leg portion (11) has a higher strength than the flange-side leg portion (13). A region of the nut-side leg portion (11) adjacent to the nut (5) has a lower strength than that of the remaining region thereof

## Description

The present invention relates to an improved blind nut type fastener capable of being set to a workpiece, such as a panel, on one side of the workpiece, more specifically, to a blind nut type fastener comprising a flange formed with a bolt-insertion hole, a plurality of clamping legs extending from a region of the flange outside the insertion hole, and a nut connected commonly and integrally to all of the ends of the clamping legs.

There has been known a blind nut type fastener capable of being set to a workpiece, such as a panel, through a one-side operation, that is, on one side of the workpiece. For example, a blind nut type fastener commercially available under the trademark "JACK Nuts" comprises a flange having an insertion hole for receiving a bolt therethrough and a contact portion outside the insertion hole and adapted to be brought into contact with a workpiece, a plurality of clamping legs extending from a region of the flange outside the insertion hole and being circumferentially spaced apart from each other, and a nut connected commonly and integrally to all of the ends of the clamping legs. This fastener is attached to a screw mandrel of a dedicated setting tool, and the nut and the clamping legs are inserted into a mounting hole of a workpiece. The setting tool is activated to pull the nut toward the flange, and then buckling is caused in the clamping legs in such a manner that a buckling portion in each of the clamping legs at an intermediate region thereof is expanded radially outward to allow the fastener to be set to the workpiece by clamping the workpiece between the buckled clamping legs and the flange.

As another blind nut type fastener, Japanese Utility Model Laid-Open No. 60-29909 (Publication 1) discloses a single-piece anchor rivet press-formed from a single metal sheet. Japanese Utility Model Laid-Open No. 01-82310 (Japanese Utility Model Publication No. 02-39052: Publication 2) discloses a two-piece fastener comprising a nut-like rivet member and a bolt member threadedly inserted into the rivet member. Japanese Patent Laid-Open No. 10-148207 (Publication 3) also discloses a two-piece fastener comprising a tubular member having a flange-shaped head with a slot and internal thread, and an externally threaded shank member to be threadedly inserted into the tubular member. Further, Japanese Patent Laid-Open No. 2000-176853 (Publication 4) proposes a jig adapted to be attached to the front end of a general-purpose impact-driver tool, to set a two-piece fastener comprising a rivet body having a hexagonal head and a tubular body formed with a slit and internal thread, and an expanding screw to be threadedly inserted into the rivet body. This jig is intended to allow the fastener to be set without using any expensive dedicated setting tool.

In the aforementioned conventional blind nut type fastener, which comprises a flange having a bolt-insertion hole and a contact portion outside the insertion hole and adapted to be brought into contact with a workpiece, a plurality of clamping legs extending from the flange while being circumferentially spaced apart from each other, and a nut connected commonly and integrally to all of the ends of the clamping legs, the buckling portion in each of the clamping legs is apt to be buckled in a way that pushes the workpiece upward instead of buckling such that it is expanded outwardly of the fastener. Thus, if the workpiece is a thin panel, the workpiece will be undesirably warpage-deformed by the pushing force of the buckled portion. Neither any awareness of this problem nor any solution therefor is disclosed in the above-mentioned Publications 1 to 4. In addition, the aforementioned conventional blind nut type fastener is constructed on the assumption of using a dedicated setting tool. Furthermore, if the fastener is rotated together with the bolt, during a setting operation, it is likely to fail to stop its lost motion.

While the fastener disclosed in Publication 1 has a flange formed with pawls to bite into a workpiece to prevent the rotation of the fastener, the pawls are not effective for a metal plate as the workpiece, and the sharp edge of each pawl is undesirable in terms of operator's safety. In the fasteners disclosed in Publications 2 to 4, a flange of the nut member is formed in a hexagonal shape to prevent the fastener from being rotated together with the bolt member. The fasteners disclosed in Publications 2 to 4 are formed in a configuration to be set without using any dedicated setting tool. However, each of the fasteners disclosed in Publications 2 to 4 is a two-piece fastener essentially including a nut member and a bolt member, but not a fastener including only a nut member.

It is therefor an object of the present invention to provide a single-piece fastener capable of eliminating the risk of causing warpage-deformation of a workpiece even if the workpiece is a thin panel.

The present invention provides, in one embodiment, a unitary fastener comprising a flange having an insertion hole for receiving a bolt therethrough and a contact portion outside the insertion hole and adapted to be brought into juxtaposition with a workpiece, a plurality of clamping legs extending from a region of the flange outside the insertion hole and being circumferentially spaced apart from each other, and a nut connected integrally to ends of the clamping legs. The nut and the clamping legs are inserted into a mounting hole of the workpiece, and then the nut is pulled toward the flange to cause buckling of the clamping legs in such a manner that a buckling portion in each of the clamping legs at an intermediate region thereof is expanded radially outward to allow the fastener to be set to the workpiece by clamping the workpiece between the buckled clamping legs and the flange. In a particular form of this fastener, the buckling portion in each of the clamping legs is thinner than the remaining portion of the clamping leg to allow a buckling beginning point to be located thereat. The remaining portion comprises a nut-side leg portion extending from the buckling portion to the nut, and a flange-side leg portion extending from the buckling portion to the flange. The nut-side leg portion is relatively thick, so as to have a higher strength than that of the flange-side leg portion, and a region of the nut-side leg portion adjacent to the nut is relatively thin, so as to have a lower strength than that of the remaining region thereof.

The above fastener is formed as a single-piece component, and in a particular form the buckling portion in each of the clamping legs of this fastener is thinner than the remaining portion of the clamping leg, the nut-side leg portion has a higher strength than the flange-side leg portion, and the region of the nut-side leg portion adjacent to the nut has a lower strength than that of the remaining region thereof. Thus, the buckling portion in each of the clamping legs is expanded outwardly, or in parallel with the surface of the workpiece during the setting operation, and the buckled portion is pulled toward the flange in the axial direction of the fastener so that its expanded posture is maintained upon completion of the setting operation. Therefore, little if any pushing force is applied to the workpiece, preventing warpage-deformation of the workpiece even if the workpiece is a thin panel. In addition, since the buckling portion in each of the clamping legs has a lower strength than the remaining portion of the clamping leg, a pulling torque during the setting operation can be maintained at a lower level to reduce an operator's load in either a dedicated tool or a general-purpose tool.

In the above fastener, the flange may have a shape with at least two parallel linear sides in plan view, e.g., a shape selected from a group including a quadrangle, a hexagon, and a pseudo-ellipse formed by cutting a circle shape with two parallel straight lines. This flange allows a general-purpose tool such as a screw wrench or spanner to be engaged therewith, so as to prevent rotation of the fastener. Thus, the fastener can be set to a workpiece using a general-purpose hand-operated tool, such as a spanner or screwdriver.

According to the present invention, another unitary fastener is provided, which comprises a flange having an insertion hole for receiving a bolt therethrough and a contact portion outside the insertion hole and adapted to be brought into juxtaposition with a workpiece, a plurality of clamping legs extending from a region of the flange outside the insertion hole and being circumferentially spaced apart from each other, and a nut connected integrally to ends of the clamping legs, wherein the nut and the clamping legs are inserted into a mounting hole of the workpiece, and then the nut is pulled toward the flange to cause buckling of the clamping legs in such a manner that a buckling portion in each of the clamping legs at an intermediate region thereof is expanded radially outward to allow the fastener to be set to the workpiece by clamping the workpiece between the buckled clamping legs and the flange. In this fastener, the flange may be have a shape with at least two parallel linear sides in plan view, e.g., a shape selected from a group including a quadrangle, a hexagon, and a pseudo-ellipse formed by cutting a circle shape with two parallel straight lines. This fastener can also be set to a workpiece using a general- purpose hand-operated tool such as a spanner or screwdriver.

A method for setting the above-mentioned fasteners to the workpiece using a general-purpose hand-operated tool is provided. That method comprises the steps of: inserting a bolt through the insertion hole of the flange of the fastener to threadedly engage the bolt with the nut, and inserting the nut and the clamping legs of the fastener with the bolt into a mounting hole of the workpiece to bring the flange into juxtaposition with the workpiece; engaging the general-purpose tool, such as a spanner, with the at least two linear sides of the flange to prevent the fastener from being rotated upon the rotation of the bolt; and rotating the bolt relative to the fastener to further screw the bolt into the nut so as to pull the nut toward the flange to cause buckling of the clamping legs in such a manner that the buckling portion in each of the clamping legs is expanded radially outward to allow the fastener to be set to the workpiece by clamping the workpiece between the buckled clamping legs and the flange. This method can eliminate the need for using a dedicated setting tool.

The invention will be further described in conjunction with the accompanying drawings, which illustrate preferred (best mode) embodiments, and wherein:

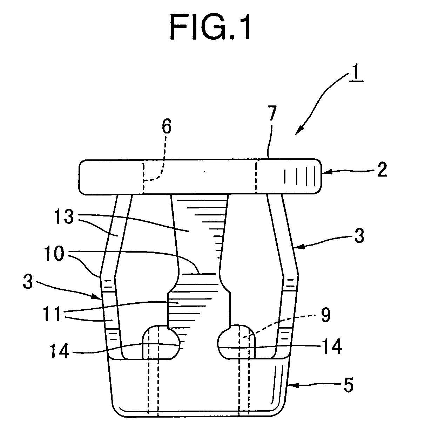

FIG 1 is a front view of a fastener according to one embodiment of the present invention;

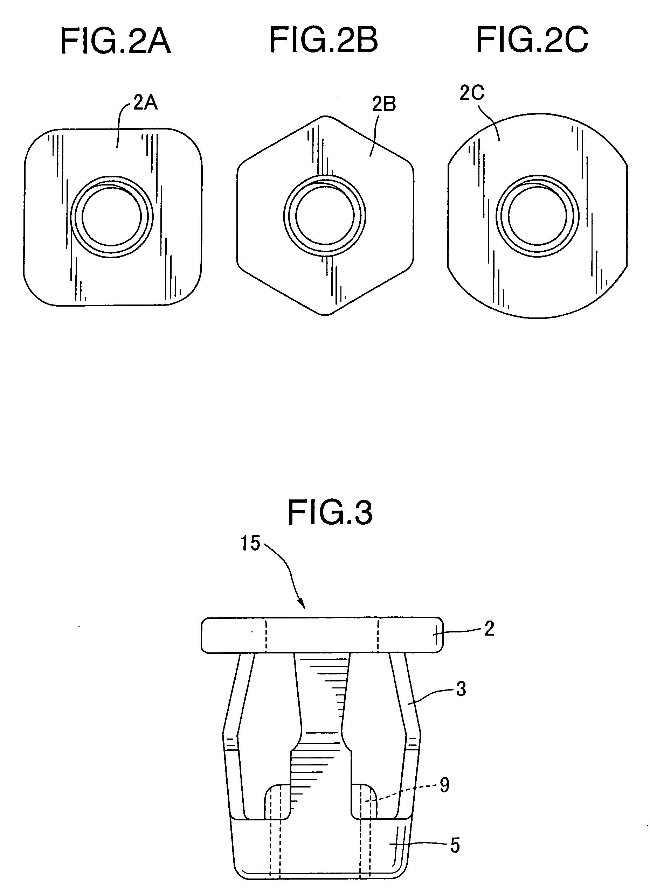

FIGs. 2A-2C are top plan views of various flanges useful in the present invention, wherein FIG 2A shows a flange having a quadrangular shape in top plan view, FIG. 2B shows a flange having a hexagonal shape in top plan view, and FIG. 2C shows a flange having a pseudo-elliptical shape in top plan view formed by cutting a circle shape with two parallel straight lines;
FIG. 3 is a front view of a fastener which may have a flange selected from the flanges shown in FIGs. 2A-2C;

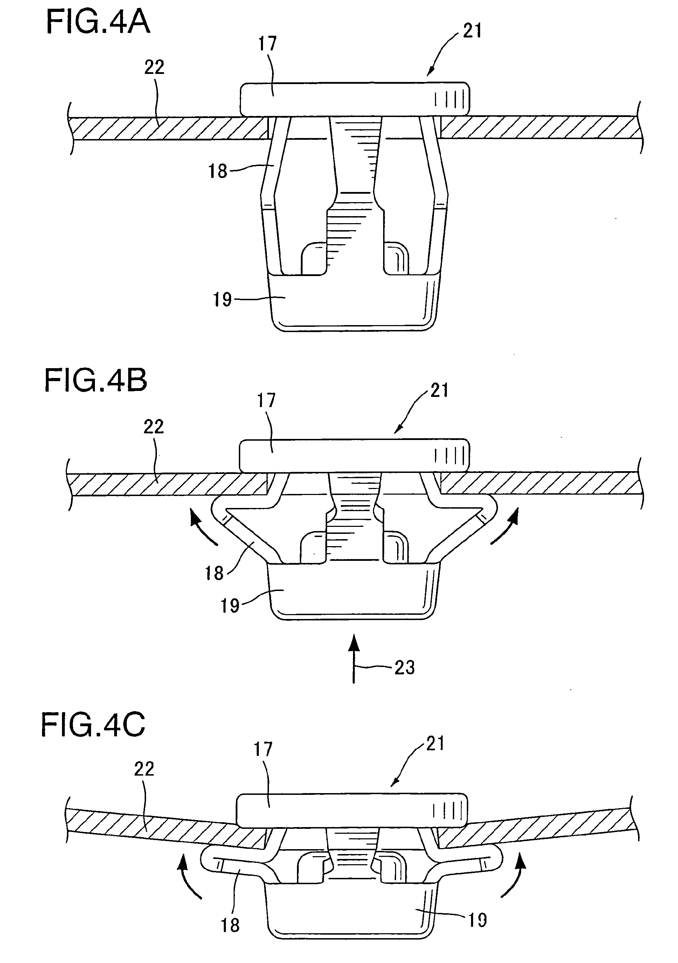

FIGs. 4A-4C are illustrative views of setting stages of a blind nut type fastener similar to that shown in FIG. 3, wherein FIG. 4A shows the state after the fastener is inserted into a workpiece, FIG 4B shows the state in the course of the setting operation, and FIG. 4C shows the state after the completion of the setting operation;

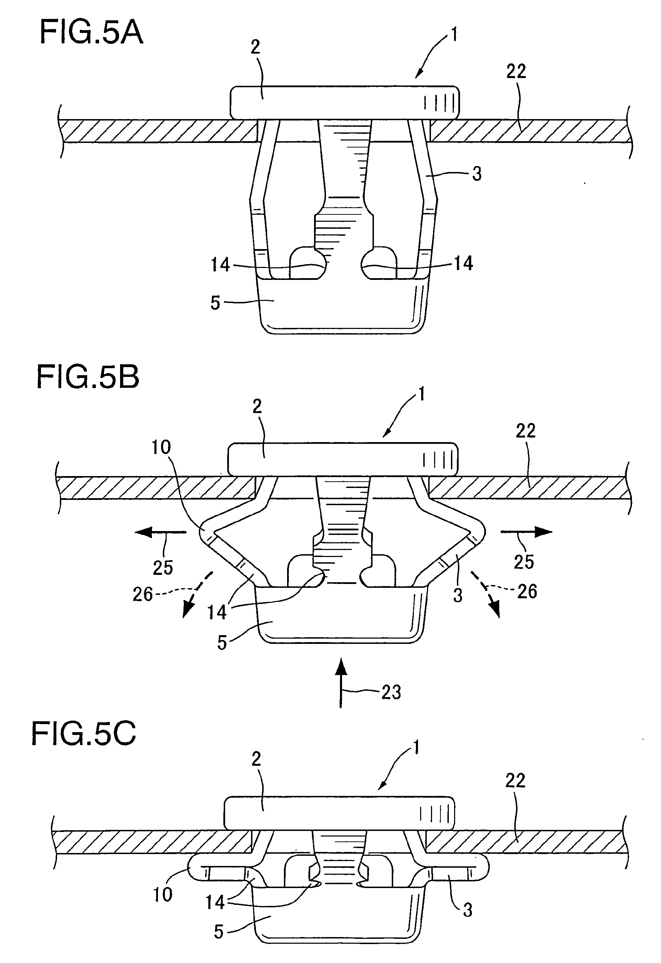

FIGs. 5A-5C are illustrative views of setting stages of a fastener according to the present invention, wherein FIG 5A shows the state after the fastener is inserted into a workpiece, FIG 5B shows the state in the course of the setting operation, and FIG 5C shows the state after the completion of the setting operation;

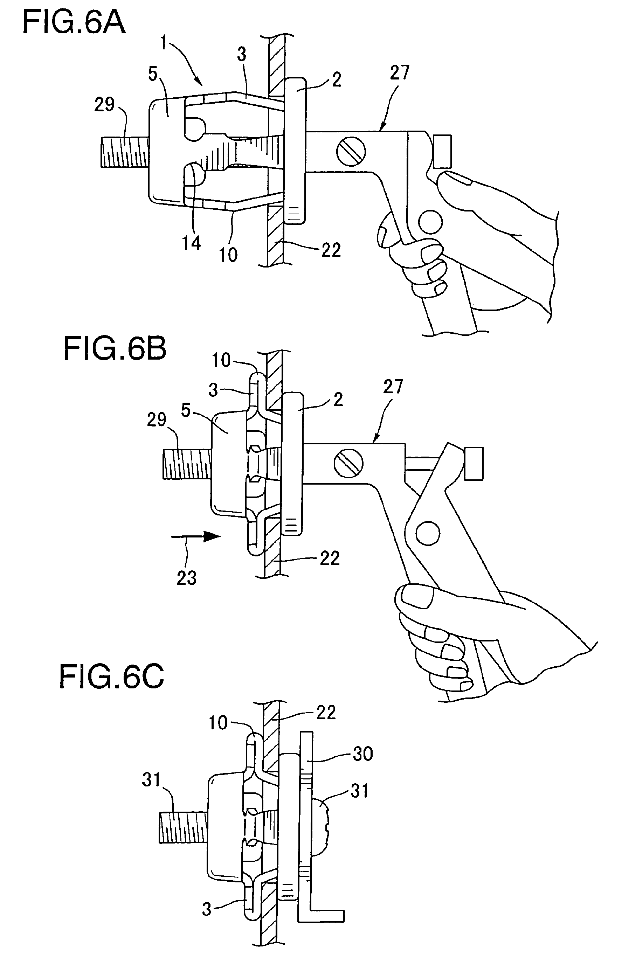

FIGs. 6A-6C are illustrative views of setting operations of a fastener according to the present invention to a workpiece using a dedicated tool, wherein FIG 6A shows the state after the fastener attached to the dedicated tool is inserted into the workpiece, FIG. 6B shows the state just after the completion of the setting operation, and FIG 6C shows the state after an additional attachment member is attached to the workpiece using the fastener set to the workpiece;

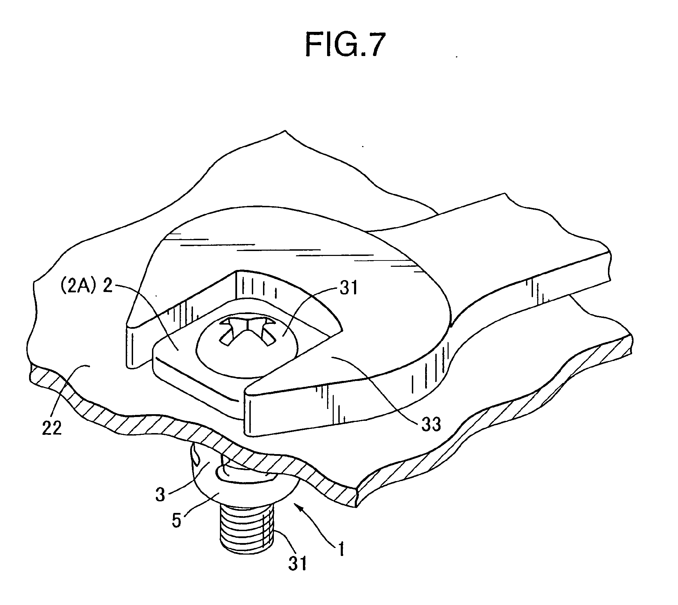

FIG 7 is a perspective view of a first step of a method for attaching a fastener according to the present invention to a workpiece using a general-purpose tool, such as a spanner, particularly an operation for engaging a bolt with the fastener, inserting the fastener into the workpiece, and preventing the rotation of the fastener using a spanner; and

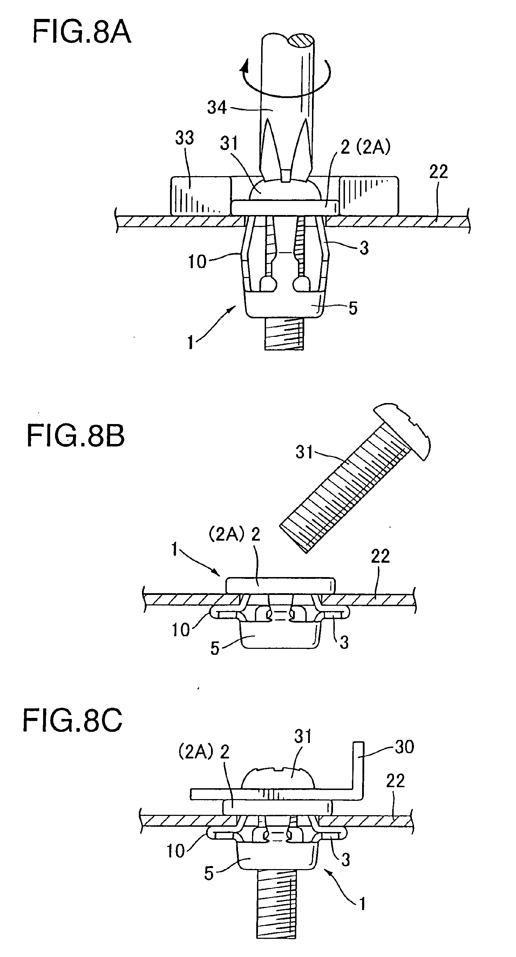

FIGs. 8A-8C are illustrative views of subsequent steps of the method for setting the fastener to the workpiece in FIG. 7, wherein FIG 8A shows the state when the bolt is rotated relative to the fastener immovably retained by the spanner, by using a screwdriver, FIG. 8B shows the state after the setting operation is completed, and the bolt is detached, and FIG 8C shows the state after an additional attachment member is attached to the workpiece using the fastener set to the workpiece.

With reference to the drawings, the present invention will now be described. FIG 1 shows a unitary fastener 1 according to one embodiment. The fastener 1 can be made of metal, such as steel or aluminum, and integrally formed as a single-piece component comprising a flange 2, a plurality of clamping legs 3 and a nut 5. The flange 2 has an insertion hole 6 formed in the central region thereof to receive a bolt therethrough, and a portion 7 outside the insertion hole with a smooth surface adapted to be brought into juxtaposition or into contact with a workpiece such as a panel. Each of the clamping legs is formed as an elongated plate-shaped member extending from a region of the flange 2 outside the insertion hole 6. The plurality of clamping legs 3 are arranged such that they are circumferentially spaced apart from each other. Although the number of legs provided is four in the illustrated embodiment, any other suitable number of legs may be selected. All of the ends of the clamping legs 3 are connected with a nut 5 commonly and integrally. The nut 5 has a tubular internal thread portion 9 therein. The internal thread portion 9 is formed with an internal thread adapted to be threadedly engaged with a bolt inserted through the insertion hole 6.

Each of the clamping legs 3 has a buckling portion 10 which is located at an intermediate region thereof. When the nut 5 is pulled toward the flange, buckling is caused in the buckling portion 10 such that it is expanded radially outward. A workpiece is clamped between the buckled clamping legs 3 and the flange 2 to allow the fastener 1 to be set to the workpiece. The buckling portion 10 is thinner than, i.e., narrower than, the remaining portion of the clamping leg to allow a buckling beginning point to be located thereat. A nut-side leg portion 11 extends from the buckling portion 10 to the nut 5, and the nut-side leg portion 11 is relatively thick to have a higher strength than a flange-side leg portion 13 which extends from the buckling portion 10 to the flange 2. In the illustrated embodiment, the nut-side leg portion 11 has a width greater than that of the flange-side leg portion 13 to obtain a higher strength than the flange-side leg portion 13.

As illustrated, the flange-side leg portion 13 is tapered so as to have a relatively wide width at the flange 2 and to have a narrower width approaching the buckling portion 10. This configuration is desirable to create buckling of the clamping legs 3 smoothly and to provide increased strength of the respective anchor ends of the buckled clamping legs 3. In each of the clamping legs 3, the flange-side leg portion 13 is also formed slightly longer than the nut-side leg portion 11. This configuration is desirable to maintain the posture of the buckled clamping legs 3 when they have been finally brought in surface contact with the workpiece. Further, in each of the clamping legs 3, a region of the nut-side leg portion 11 adjacent to the nut 5 is relatively thin to have a lower strength than the remaining region thereof. In the illustrated embodiment, the region of the nut-side leg portion 11 adjacent to the nut 5 is formed with a pair of notches 14 for providing a narrowed width in the nut-side leg portion 11, so that the region with the notches 14 is thinned to have a lower strength than the remaining region of the nut-side leg portion. As shown in FIG 1, the nut-side leg portion 11 has reduced thickness portions at its opposite ends adjacent to the nut 5 and the flange-side leg portion 13, respectively.

FIGS. 2A to 2B show various shapes of the flange 2. In FIG 2A, the flange 2A has a quadrangular shape in top plan view. In FIG. 2B, the flange 2B has a hexagonal shape in top plan view. In FIG 2C, the flange 2C has a pseudo-ellipse shape in top plan view, formed by cutting a circle with two parallel straight lines. As shown in these examples, the flange may be formed in any suitable shape having at least two parallel linear sides. This flange allows a general-purpose tool such as a spanner to be engaged therewith to prevent the rotation of the fastener 1. Thus, during the operation of rotating a bolt inserted into the fastener, the fastener 1 can be prevented from being rotated upon the rotation of the bolt, and the fastener 1 can be set to the workpiece using a general-purpose hand-operated tool, such as a spanner or screwdriver, as well as a dedicated setting tool. The shapes of the flanges 2A to 2C may be applied to a fastener 15 as shown in FIG. 3, which does not includes notches 14 of the fastener 1 of FIG. 1.

FIGS. 4A to 4C show the state when a blind nut type fastener 21 similar to that shown in Fig. 3 is set to a workpiece 22. The fastener 21 comprises a flange 17, a plurality of clamping legs 18 extending from the flange 17 while being circumferentially spaced apart from each other, and a nut 19 connected commonly and integrally to all of the ends of the clamping legs. As shown in FIG 4A, the nut 19 and the clamping legs 18 of the fastener 21 are first inserted into a mounting hole of the workpiece 22 to bring the flange 17 into surface contact with the workpiece 22. Then, as shown in FIG. 4B, the nut 19 is pulled toward the flange 17 in the direction of the arrow 23 using a setting tool. Through this operation, the clamping legs 18 are deformed such that a buckling portion in each of the clamping legs is expanded radially outward. During this deformation, the clamping legs 18 are apt to be buckled in a way that pushes the workpiece 22 upward instead of buckling such that each of the buckling portions is expanded in parallel with the workpiece 22. Thus, if the workpiece 22 is a thin panel, an undesirable warpage-deformation of the workpiece 22 due to the upward-pushing force of the buckled clamping legs 18 may occur, as shown in FIG. 4C.

FIGS. 5A to 4C show the state when the fastener 1 of the present invention is set to the workpiece 22. As shown in FIG 5A, the nut 5 and the clamping legs 3 of the fastener 1 are first inserted into the mounting hole of the workpiece 22 to bring a smooth surface of the contact portion of the flange 2 into juxtaposition or surface contact with the workpiece 22. Then, as shown in FIG. 5B, the nut 5 is strongly pulled toward the flange 2 in the direction of the arrow 23. Through this operation, the clamping legs 3 are deformed such that the buckling portions 10 are expanded radially outward. During this deformation, the clamping legs 3 are buckled such that each of the buckling portions 10 is expanded outwardly or in parallel with the workpiece 22 (in the direction of the arrows 25). This buckling is obtained because the region of the nut-side leg portion 11 adjacent to the nut 5 in each of the clamping legs 3 is formed with the pair of notches 14 so as to have a lower strength than the remaining region thereof. As indicated by the dashed-line arrows 26, the nut-side leg portion 11 in each of the clamping legs 3 reduces the upward-pushing force in proportion to the level of decrease in the strength of the region of the nut-side leg portion 11 adjacent to the nut 5. When the setting operation is continued, the clamping legs 3 are continuously buckled outwardly (in a direction parallel to the surface of the workpiece 22).

The setting operation reaches the final stage without applying any significant upward-pressing force to the workpiece 22. As shown in FIG 5C, upon completion of the setting operation, the buckled clamping legs 3 are simply pulled toward the flange 2 along the axis of the fastener while maintaining their outwardly expanded posture, and no upward stress is applied the to the workpiece. Therefore, even if the workpiece 22 is a thin panel 22, warpage-deformation can be prevented. The buckled clamping legs 3 are located along the surface of the workpiece 22. Thus, the workpiece 22 is firmly clamped between the buckled clamping legs 3 and the flange 2 without any deterioration in the clamping force of the fastener 1 to the workpiece 22. Furthermore, since the region of the nut-side leg portion 11 adjacent to the nut 5 in each of the clamping legs 3 is formed with the notches 14 so as to have a lower strength than the remaining region thereof, the expansive buckling can be achieved by a lower force than that required in clamping legs devoid of notches, allowing the pulling force during the setting operation to be maintained at a lower level, so as to reduce an operator's load in either a dedicated tool or a general-purpose tool.

FIGS. 6A to 6C show the state in which the fastener 1 is set to the workpiece 22 using a dedicated setting tool 27. In these drawings, the fastener 1 is depicted larger than the setting tool 27 in an exaggerated form only for easy understanding. A screw mandrel 29 capable of being threadedly inserted into the nut 5 of the fastener 1 is provided at the front end of the setting tool 27, and the fastener 1 is threadedly engaged with the screw mandrel 29. As shown in FIG 6A, an operator who holds the setting tool 27 with the fastener attached thereto inserts the nut 5 and the clamping legs 3 of the fastener 1 into the mounting hole of the workpiece 22 to bring the contact surface portion of the flange 2 into surface contact with the workpiece 22. Then, as shown in FIG 6B, the nut 5 is strongly pulled toward the flange 2 in the direction of the arrow 23 to deform the clamping legs 3 in such a manner that the buckling portions 10 are expanded radially outward. The workpiece 22 is firmly clamped between the buckled clamping legs 3 and the flange 2 to allow the fastener 1 to be set to the workpiece 22.

Since the region of the nut-side leg portion 11 formed with the notches 14 in each of the clamping legs 3 has a lower strength, the pulling torque during the above setting operation can be maintained at a lower level than that required with clamping legs devoid of notches so as to reduce a load of the operator who handles the setting tool 27. After the completion of the setting, the screw mandrel 29 is reversely rotated and pulled out of the fastener 1 to detach the setting tool 27 from the fastener 1. Then, for example, a mounting hole of an additional attachment member 30, such as a bracket, is positioned so as to be aligned with the bolt-insertion hole 6 of the flange 6. A bolt 31 is then inserted through the mounting hole and the insertion hole, and threadedly engaged with the nut 5 to connect the attachment member 30 to the workpiece 22.

FIG 7 and FIGS. 8A to 8C show a method of setting the fastener 1 having a flange of a shape selected from the shapes in FIGS. 2A-2C, using a general-purpose tool, such as a spanner or screwdriver, instead of a dedicated setting tool. Although the following description assumes a fastener having a quadrangular flange illustrated in FIG. 2A, it is understood that a flange illustrated in FIG. 2B or 2C or any other flange having two or more parallel linear sides may be used. FIG 7 shows an explanatory perspective view of an initial step of the setting method. FIGS. 8A to 8C show subsequent steps.

As shown in FIG. 7, a bolt 31 is inserted into the fastener 1 through the insertion hole of the flange 2, and threadedly engaged with the nut 5 to attach the bolt 31 to the fastener 1. The nut 5 and the clamping legs 3 of the fastener 1 with the bolt are inserted into the mounting hole of the workpiece 22 to bring the flange 2 of the fastener 1 into surface contact with the workpiece 22. Then, a general-purpose tool, such as a spanner 22, is engaged with the two linear sides of the flange 2 of the fastener 1 to prevent the fastener 1 from being rotated upon the rotation of the bolt 3. Instead of the engagement with the general-purpose tool, a portion or portions of the workpiece may be engaged with the two linear sides of the flange 2 of the fastener 1 to prevent the rotation of the fastener 1.

As shown in FIG 8A, by using a general-purpose tool such as a screwdriver 34, the bolt 31 is rotated relative to the fastener 1 immovably retained by the spanner 33 to further screw the bolt 31 into the nut 5 strongly. Through this operation, the nut 5 of the fastener 1 is pulled toward the flange 2 to cause buckling of the clamping legs 3 in such a manner that the buckling portion 10 in each of the clamping legs 3 is expanded radially outward. The workpiece 22 is clamped between the buckled clamping legs 3 and the flange 2 to allow the fastener 1 to be set to the workpiece 22 (see FIG 8B). Even if the fastener is apt to be rotated together with the bolt during the setting operation, such rotation can be stopped by the spanner 33.

Since the region of the nut-side leg portion 11 formed with the notches 14 in each of the clamping legs 3 has a lower strength, the pulling torque during the above setting operation can be maintained at a lower level than that required with clamping legs devoid of notches. Where a fastener having clamping legs without any notches is set by a screwdriver which is manually driven by an operator, a higher pulling torque is necessary to set the fastener, leading to difficulty in setting the fastener. On the contrary, where the region of the nut-side leg portions 11 is formed with the notches 14 in each of the clamping legs 3 for a lower strength, the pulling torque can be reduced to allow the fastener 1 to be manually set using a general-purpose screwdriver without any difficulties.

After the completion of the setting, the bolt 31 can be detached as shown in FIG 8B. Then, for example, a mounting hole of an additional attachment member 30, such as a bracket, is positioned so as to be aligned with the bolt-insertion hole 6 of the flange 2. The bolt 31 can be then inserted through the mounting hole and the insertion hole, and threadedly engaged with the nut 5 to connect the attachment member 30 to the workpiece 22.

A fastener according to the present invention is formed as a single-piece component, and the buckling portion in each of the clamping legs is expanded outwardly, or in parallel with the surface of a workpiece, during the setting operation, and the buckling portion is pulled toward the flange along the axis of the fastener so that its expanded posture is maintained upon completion of the setting operation. Thus, no significant pushing force is applied to the workpiece, preventing warpage-deformation of the workpiece even if the workpiece is a thin panel. The flange may be formed in a shape having at least two parallel linear sides in top plan view to allow the fastener to be set to a workpiece using a general-purpose tool such as a screw wrench or spanner. In addition, since the buckling portion in each of the clamping legs has a lower strength than the remaining portion of the clamping leg, a pulling torque during the setting operation can be maintained at a lower level to reduce an operator's load in either a dedicated tool or a general-purpose tool.

While preferred embodiments of the invention have been shown and described, it will be apparent that modifications can be made without departing from the principles and spirit of the invention, the scope of which is defined in the appended claims.

## Claims

1. A fastener comprising:
a flange (2) having an insertion hole (6) for receiving a bolt therethrough, and a portion outside the insertion hole to be brought into juxtaposition with a workpiece;
a plurality of clamping legs (3) extending from a region of the flange outside the insertion hole and being circumferentially spaced apart from each other; and
a nut (5) connected integrally to ends of the clamping legs,
wherein the nut and the clamping legs are inserted into a mounting hole of the workpiece (22), and then the nut is pulled toward the flange to cause buckling of the clamping legs in such a manner that a buckling portion (10) in each of the clamping legs at an intermediate region thereof is expanded radially outward to allow the fastener to be set to the workpiece by clamping the workpiece between the buckled clamping legs and the flange,
wherein the buckling portion (10) in each of the clamping legs is thinner than the remaining portion of the clamping leg to allow a buckling beginning point to be located thereat, the remaining portion including a nut-side leg portion (11) extending from the buckling portion to the nut, and a flange-side leg portion (13) extending from the buckling portion to the flange; and
wherein the nut-side leg portion is relatively thick so as to have a higher strength than that of the flange-side leg portion, and a region of the nut-side leg portion adjacent to the nut is relatively thin so as to have a lower strength than the remaining region thereof.

2. The fastener as defined in claim 1, wherein the flange (2) has a shape with at least two parallel linear sides in plan view, the shape being selected from a group including a quadrangle, a hexagon, and a pseudo-ellipse formed by cutting a circle shape with two parallel straight lines.

3. A fastener comprising:
a flange (2) having an insertion hole (6) for receiving a bolt therethrough, and a portion outside the insertion hole and adapted to be brought into juxtaposition with a workpiece;
a plurality of clamping legs (3) extending from a region of the flange outside the insertion hole and being circumferentially spaced apart from each other; and
a nut connected integrally to ends of the clamping legs,
wherein the nut and the clamping legs are inserted into a mounting hole of the workpiece (22), and then the nut is pulled toward the flange to cause buckling of the clamping legs in such a manner that a buckling portion in each of the clamping legs at an intermediate region thereof is expanded radially outward to allow the fastener to be set to the workpiece by clamping the workpiece between the buckled clamping legs and the flange, and
wherein the flange (2) has a shape with at least two parallel linear sides in plan view, the shape being selected from a group including a quadrangle, a hexagon, and a pseudo-ellipse formed by cutting a circle shape with two parallel straight lines.

4. A method for setting the fastener as defined in claim 2 to a workpiece, comprising the steps of:
inserting a bolt through the insertion hole of the flange of the fastener to threadedly engage the bolt with the nut, and inserting the nut and the clamping legs of the fastener with the bolt into a mounting hole of the workpiece to bring the flange into juxtaposition with the workpiece;
engaging either a general-purpose tool or a portion of the workpiece with the at least two linear sides of the flange to prevent the fastener from being rotated upon the rotation of the bolt; and
rotating the bolt relative to the fastener to further screw the bolt into the nut so as to pull the nut toward the flange to cause buckling of the clamping legs in such a manner that the buckling portion in each of the clamping legs is expanded radially outward to allow the fastener to be set to the workpiece by clamping the workpiece between the buckled clamping legs and the flange.

5. A method for setting the fastener as defined in claim 3 to a workpiece, comprising the steps of:
inserting a bolt through the insertion hole of the flange of the fastener to threadedly engage the bolt with the nut, and inserting the nut and the clamping legs of the fastener with the bolt into a mounting hole of the workpiece to bring the flange into juxtaposition with the workpiece;
engaging either a general-purpose tool or a portion of the workpiece with the at least two linear sides of the flange to prevent the fastener from being rotated upon the rotation of the bolt; and
rotating the bolt relative to the fastener to further screw the bolt into the nut so as to pull the nut toward the flange to cause buckling of the clamping legs in such a manner that the buckling portion in each of the clamping legs is expanded radially outward to allow the fastener to be set to the workpiece by clamping the workpiece between the buckled clamping legs and the flange.

6. A fastener as defined in Claim 3, wherein the buckling portion (10) in each of the clamping legs (3) is thinner than the remaining portion of the clamping leg to allow a buckling beginning point to be located thereat, the remaining portion including a nut-side leg portion (11) extending from the buckling portion to the nut (5), and a flange-side leg portion (13) extending from the buckling portion to the flange (2).

7. A fastener as defined in Claim 6, wherein the nut-side leg portion (11) is relatively thick so as to have a higher strength than the flange-side leg portion (13), and a region of the nut-side leg portion adjacent to the nut is relatively thin so as to have a lower strength than the remaining region thereof.

8. A fastener as defined in Claim 7, wherein the flange-side leg portion (13) tapers from a wider width at the flange to a narrower width at the buckling portion (10).

9. A fastener as defined in Claim 8, wherein the flange-side leg portion (13) is longer than the nut-side leg portion (11).

10. A fastener as defined in Claim 6, wherein the nut-side leg portion has reduced thickness portions (10, 14) at opposite ends thereof adjacent to the nut (5) and to the flange-side leg portion (13), respectively.
